# EUROPÄISCHE PATENTSCHRIFT

(11) **EP 1 459 826 B1**
(45) Veröffentlichungstag und Bekanntmachung des Hinweises auf die Patenterteilung: **23.05.2007**
(21) Anmeldenummer: 04090108.4
(22) Anmeldetag: 15.03.2004
(51) Int. Cl.: B23D 29/02

(54) **Handschneidgerät zum Ablängen von Kabeln**
Hand-held tool for cutting cables
Outil portatif pour couper des câbles

(30) Priorität: 15.03.2003 DE 10312507
(43) Veröffentlichungstag der Anmeldung: 22.09.2004
(73) Patentinhaber: Laux Industrie GmbH, 14641 Buchow-Karpzow (DE)
(72) Erfinder: Laux, Steffen, 14109 Berlin (DE)
(74) Vertreter: Scholz, Hartmut

(56) Entgegenhaltungen:
- DE-C- 331 657
- FR-A- 807 547
- GB-A- 148 504
- GB-A- 2 321 029
- US-A- 1 524 723
- US-A- 1 615 882
- US-A- 1 657 730
- US-A- 4 062 218
- US-A- 5 638 602
- PATENT ABSTRACTS OF JAPAN Bd. 008, Nr. 170 (M-315), 7. August 1984 (1984-08-07) & JP 59 064216 A (SEIATSU:KK), 12. April 1984 (1984-04-12)

## Beschreibung

Die Erfindung betrifft ein Handschneidgerät zum Ablängen von Kabeln, Stahlseilen, Stangen und dergleichen, mit zwei bewegbaren Schneidmitteln, von denen eines mit einer feststehenden Handhabe verbunden und das andere mittels einer beweglichen Handhabe und eines Untersetzungsgetriebes gegen das feststehende Schneidmittel bewegbar ist und den Schneidmitteln an sich bekannte, kraft- und formschlüssig verbindbare, austauschbare Schneidelemente zugeordnet sind.

Derartige Handschneidgeräte dienen dazu, Kabel, Stahlseile oder dgl., die zur Weiterverarbeitung beispielsweise von Seiltrommeln abgewickelt werden, auf eine jeweils erforderliche Länge abzutrennen. Dazu sind oft sehr hohe Schneidkräfte erforderlich, die mittels eines Untersetzungsgetriebes von gegeneinander bewegbaren Haltegriffen ausgeübt werden können. Durch das Untersetzungsgetriebe können die einander gegenüber stehenden Schneidmittel mit relativ geringem Kraftaufwand langsam gegeneinander bewegt werden. Die Schneidmittel können als einander gegenüber liegende Winkelscheren oder als Drehmesser ausgebildet sein, wie es beispielsweise aus der EP 0 186 222 B1 bekannt ist.

Es hat sich gezeigt, dass eine besonders saubere Trennung erreicht wird, wenn die zu trennenden Stränge nicht wie bei einem Seitenschneider, wie er aus der US-A 4,670,983 bekannt ist, geschert werden, sondern wenn die Kräfte so auf das zu trennende Material einwirken, dass es zu einem Bruch kommt. Dies wird durch die auf den Strang einwirkenden Schneidelemente erreicht. Die Schneidelemente sollten dabei in Größe und Form möglichst gut an den zu trennenden Strang angepasst sein.

Die Schneidmittel sind relativ hohen mechanischen Belastungen und je nach zu schneidendem Material einer relativ hohen Verschleißbeanspruchung ausgesetzt. Auch die recht raue Handhabung auf Baustellen mit einem hohen Verschmutzungsgrad und unterschiedliche zu schneidende Werkstoffe schränken den Gebrauchswert häufig sehr ein. Aus der Druckschrift US 4,062,218 ist dazu eine Vorrichtung gemäß dem Oberbegriff des Anspruchs 1 bekannt, bei der die Klingen austauschbar sind. Dieser Austausch ist jedoch relativ zeitaufwändig und auf Baustellen, die sich oft an Strommasten in schwindelnder Höhe befinden, schwierig zu handhaben.

Aus der GB 2 321 029 A ist eine Schneidvorrichtung bekannt, bei der die Klingen mit austauschbar sind. Diese austauschbaren Klingen müssen zum Gebrauch jedoch mit Haltemitteln, nämlich Schrauben, in ihrer Lage gehalten werden. Auch ein solcher Klingenaustausch lässt sich unter den oben beschriebenen Arbeitsbedingungen nur schwer bewerkstelligen.

Aufgabe der vorliegenden Erfindung ist es, ein Handschneidgerät der eingangs beschriebenen Art zu schaffen, das universell eingesetzt werden kann und dessen Gebrauchswert mit relativ einfachen Mitteln für lange Zeit erhalten werden kann.

Gelöst wird diese Aufgabe durch die des Anspruchs 1.

Durch diese Maßnahmen wird ein Handschneidgerät geschaffen, bei dem die hoch beanspruchten und deshalb schnell verschleißenden Bauteile auch unter ungünstigen Arbeitsbedingungen schnell und einfach ausgewechselt und durch Neuteile ersetzt werden können. Die Schneidelemente können schnell und einfach eingewechselt und den jeweiligen Anforderungen optimal angepasst werden.

Das Handschneidgerät als Solches behält dabei seine grundsätzliche Gebrauchsfähigkeit und kann mit relativ einfachen Mitteln für unterschiedliche Betriebsbedingungen bereitgehalten werden. So können zum Durchtrennen von Glasfaserkabeln beispielsweise keramische Schneidelemente eingewechselt werden.

Zur Erleichterung einer sicheren und zielgenauen Auswechslung ist es bei einer Ausführung vorgesehen, dass die Schneidelemente an ihren vorderen freien Enden mit Anfasungen versehen sind und die Schneidelemente mit diesen Anfasungen unter innen liegende Materialverringerungen des jeweils gegenüberliegenden Schneidmittels einlegbar sind.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- **Figur 1**: die isometrische Darstellung eines nicht erfindungsgemäßen Handschneidgerätes mit feststehendem Schneidmittel und gegen das Schneidmittel beweglichem Schneidmittel, mit auswechselbaren Schneidelementen;
- **Figur 2**: die isometrische Einzeldarstellung eines Schneidelements mit flachem Freiwinkel, steilem Schneidenwinkel und konkavem Schneidenradius;
- **Figur 3**: die Seitenansicht eines Schneidelementes nach der Figur 2, mit versenkbarem Segmentabsatz;
- **Figur 4**: die isometrische Darstellung eines erfindungsgemäßen Handschneidgeräts mit vergrößertem Drehmesserbogen, mit gegeneinander abgestützten Schneidelementen, die mit Haltenuten an Haltenasen in Führungsabsätzen der Schneidmittel schwimmend gelagert sind;
- **Figur 5**: eine isometrische Explosionsdarstellung eines Handschneidgerätes nach Figur 4.

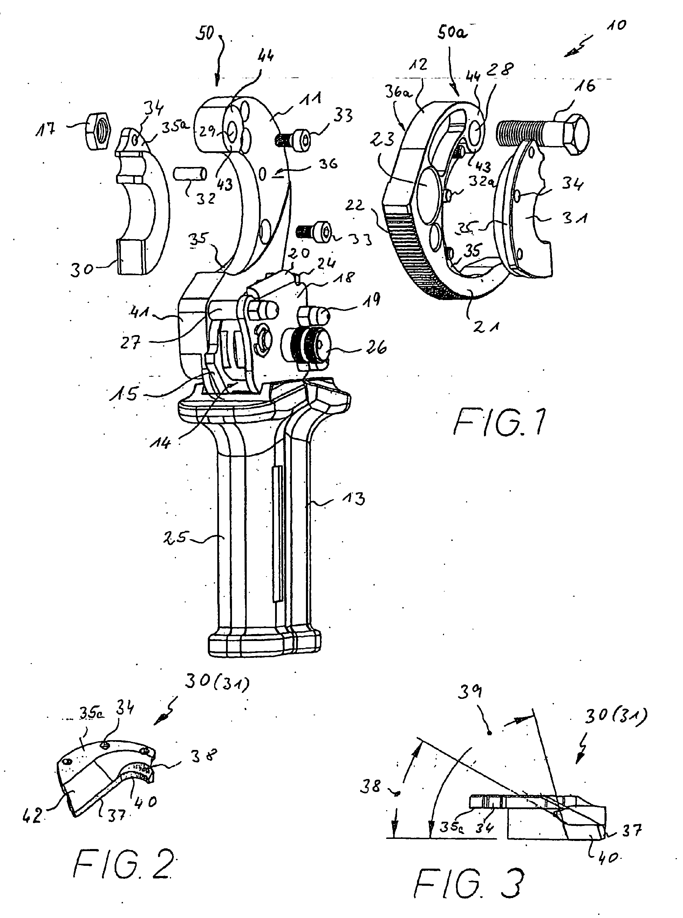

Das in der Figur 1 dargestellte Handschneidgerät 10 besteht im Wesentlichen aus einem feststehenden Schneidmittel 11, das einstückig mit einer feststehenden Handhabe 13 verbunden ist. Relativ zu dem feststehenden Schneidmittel 11 kann ein als Drehmesser ausgebildetes bewegliches Schneidmittel 12 mittels eines nicht näher dargestellten Untersetzungsgetriebes 14 bewegt werden.

Das bewegliche Schneidmittel 12 ist an seinem der Handhabe 13 gegenüberliegenden äußeren freien Ende 50a mit einer Gelenkbohrung 28 versehen, die mit einer Gelenkbohrung 29 am äußeren freien Ende 50 des feststehenden Schneidmittels 11 in Wirkverbindung gebracht werden kann. Durch die Gelenkbohrungen 28 und 29 ist eine Zapfenschraube 16 gesteckt, die mit einer Kontermutter 17 gesichert werden kann.

Die Gelenkbohrung 29 kann auch mit einem Gewinde versehen sein, in das die Zapfenschraube 16 eingeschraubt und mit der Kontermutter 17 gesichert wird. Die Zapfenschraube 16 dient als Drehachse für das bewegliche Schneidmittel 12 und ist mit einem Linksgewinde versehen, um zu verhindern, dass sie sich bei der Drehbewegung des Schneidmittels 12 selbsttätig löst.

An seiner der Gelenkbohrung 28 gegenüberliegenden Seite ist das Schneidmittel 12 mit einem Drehmesserbogen 21 versehen, der an seiner Außenseite eine Verzahnung 22 aufweist. Die Verzahnung 22 ist vorzugsweise als eine Modulverzahnung ausgeführt.

Um das Schneidmittel 12 relativ zu dem feststehenden Schneidmittel 11 bewegen zu können, ist ein nicht näher dargestelltes Untersetzungsgetriebe 14 vorgesehen. Das Untersetzungsgetriebe 14 ist in einem von einer Deckplatte 18 abgedeckten, nicht näher dargestellten Getriebegehäuse untergebracht und weist einen als Zahnklinke 15 ausgebildeten Transporthebel auf. Die Zahnklinke 15 kann mit der Verzahnung 22 des Schneidmittels 12 in Wirkverbindung gebracht werden.

Die Deckplatte 18 weist einen gegen das Schneidmittel 12 gerichteten, axialen Führungswulst 20 auf, mit dem der Drehmesserbogen 21 des Schneidmittels 12 bei Eingriff der Zahnklinke 15 geführt wird. Die Deckplatte 18 ist über Distanzhülsen 27 in einen passgenauen Abstand zu dem Schneidmittelfuß 41 des feststehenden Schneidmittels 11 gehalten. Durch die Distanzhülsen 27 sind nicht näher dargestellte Gehäuseschrauben geführt, die von Hutmuttern 19 gehalten werden.

Die Zahnklinke 15 wird über das Untersetzungsgetriebe 14 mit einer beweglichen Handhabe 25 bewegt. Dabei greift die Zahnklinke 15 Zahn für Zahn in die Verzahnung 22 am Drehmesserbogen 21 ein und bewegt das Schneidmittel 12 langsam gegen das feststehende Schneidmittel 11. Um ein Zurückspringen der Verzahnung 22 zu vermeiden, ist eine Sperrklinke 24 vorgesehen. Die Sperrklinke 24 ist als Wippe ausgebildet und wird mit einer nicht näher dargestellten Haltefeder in Eingriff mit der Verzahnung 22 gehalten.

Die bewegliche Handhabe 25 kann relativ zu der feststehenden Handhabe 13 bewegt werden. Um eine unbeabsichtigte Bedienung des Schneidmittels 12 zu vermeiden, ist eine Sperrwelle 26 vorgesehen, mit der das Handschneidgerät 10 gesperrt werden kann. Um das Schneidmittel 12 nach erfolgtem Einsatz wieder in seine Ausgangsposition zu bringen, in der es um ein abzulängendes Kabel gelegt werden kann, ist eine Handhabungsöffnung 23 vorgesehen. Mit der Handhabungsöffnung 23 kann der Drehmesserbogen 21 über die außer Eingriff gebrachte Zahnklinke 15 gezogen und das Handschneidgerät 10 damit geöffnet werden.

Dem feststehenden Schneidmittel 11 ist ein auswechselbares, festes Schneidelement 30 zugeordnet, während dem beweglichen Schneidmittel 12 ein auswechselbares, bewegliches Schneidelement 31 zugeordnet ist. Das Schneidelement 30 ist mit einem Zentrierstift 32 passgenau mit dem festen Schneidmittel 11 verbunden, während das Schneidelement 31 mit einem Zentrierstift 32a passgenau mit dem beweglichen Schneidmittel 12 verbunden und gegen Verdrehen durch den natürlichen Schneiddruck gesichert ist.

Die Zentrierstifte 32 und 32a werden passgenau in Zentrierbohrungen 34 geführt. Die Schneidelemente 30 und 31 sind mit Befestigungsschrauben 33 form- und kraftschlüssig mit den Schneidmitteln 11 und 12 verbunden.

Die Schneidelemente 30 und 31 weisen jeweils einen Absatz 35a auf, mit dem sie gegen einen Führungsabsatz 35 in dem Schneidmittel 11 bzw. in dem Schneidmittel 12 eingesenkt sind. Die Einsenkungen sind so ausgebildet, dass sie mit der Oberfläche 36 des Schneidmittels 11 bzw. mit der Oberfläche 36a des Schneidmittels 12 passgenau und bündig abschließen. Sie sind eingerieben, um bei den hohen auftretenden Übertragungskräften jegliches Spiel zu vermeiden.

Wie die Figur 2 zeigt, weisen die Schneidelemente 30 und 31 konkave Schneidradien 40 auf, die grob der Kontur eines zu durchtrennenden Kabels oder Stahlseils entsprechen. Die Schneiden 37 gehen dabei einstückig in einen angefasten Schneidenwinkel 42 in das Schneidmittel 11 bzw. das Schneidmittel 12 bündig über.

Wie die Figur 3 im Detail zeigt, weisen die Schneidelemente 30 und 31 Schneiden 37 auf. Die Schneiden 37 der Schneidelemente 30 bzw. 31 sind mit relativ flachen Freiwinkeln 38 versehen, die in relativ steile Schneidenwinkel 39 übergehen. Die Schneidenwinkel 39 betragen circa 30°, während die Freiwinkel 38 circa 70° betragen.

Die auswechselbaren Schneidelemente 30 und 31 können aus verschiedenharten Materialien, beispielsweise aus gehärtetem Stahl oder Keramik bestehen. Sie können auch verschiedene einfach- oder doppelt gekrümmte Formen aufweisen und so dem jeweiligen Gebrauchszweck universell angepasst werden.

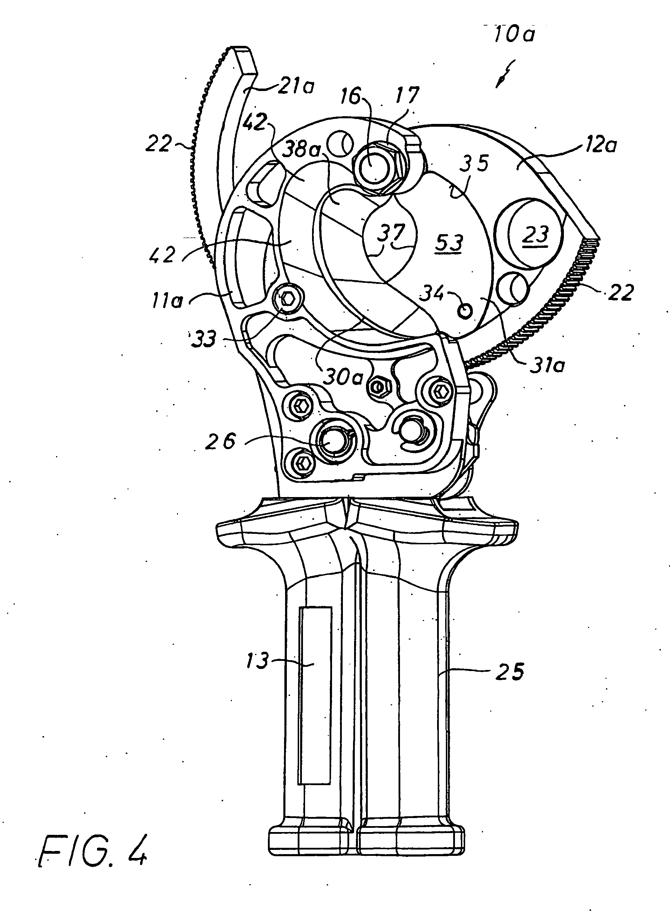

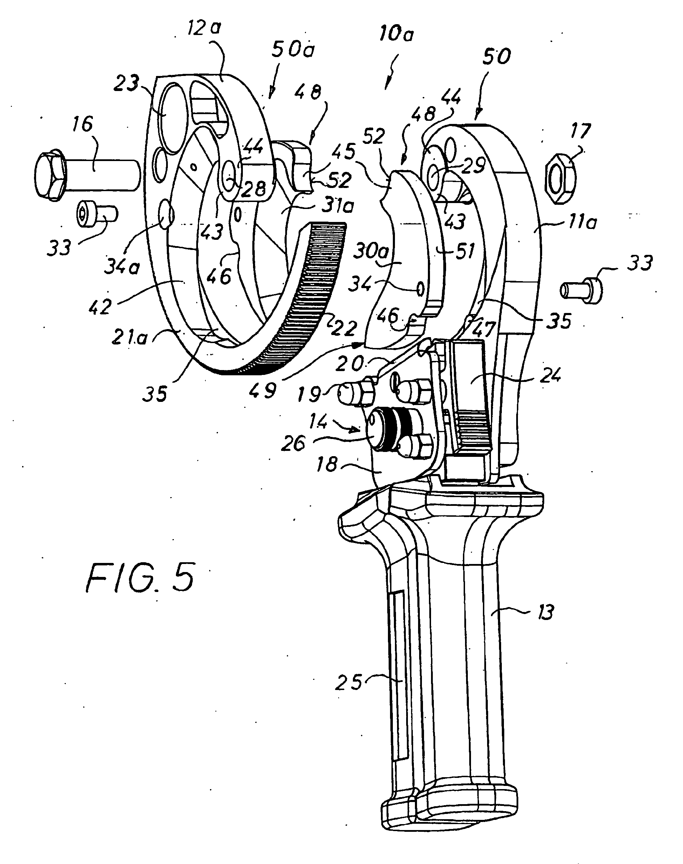

Das in den Figuren 4 und 5 dargestellte erfindungsgemäßen Handschneidgerät 10a weist ebenfalls ein feststehendes Schneidmittel 11a und ein dagegen verschwenkbares, bewegliches Schneidmittel 12a auf. Das feststehende Schneidmittel 11a ist mit einer feststehenden Handhabe 13 versehen. Das bewegliche Schneidmittel 12a kann mit einer beweglichen Handhabe 25 über ein nicht näher dargestelltes Untersetzungsgetriebe 14 gegen das feststehende Schneidmittel 11a bewegt werden.

Das bewegliche Schneidmittel 12a weist einen Drehmesserbogen 21a auf, der in seinen Abmessungen etwa einem halben Kreis entspricht. Radial außen ist der Drehmesserbogen 21a mit einer Verzahnung 22 versehen, in die das Untersetzungsgetriebe 14 mit einer nicht näher dargestellten Sperrklinke den Vorschub bewirkend eingreifen kann.

Die Schneidmittel 11a und 12a sind an ihre, in Einbaulage den Handhaben 13 und 25 gegenüberliegenden äußeren freien Enden 50 bzw. 50a mit Gelenkbohrungen 28 bzw. 29 versehen. Durch diese Gelenkbohrungen 28 und 29 ist eine Zapfenschraube 16 gesteckt und mit einer Kontermutter 17 gesichert. Das bewegliche Schneidmittel 12a kann um die Zapfenschraube 16 gegen das feststehende Schneidmittel 11a geschwenkt werden.

Die Schneidmittel 11a und 12a sind radial innen jeweils mit einem Führungsabsatz 35 versehen. In diese Führungsabsätze 35 sind einander gegenüberliegende, spiegelbildlich gleiche Schneidelemente 30a und 31a mit ihren Schneidelementrücken 51 bündig eingelegt. Die Schneidelemente 30a und 31a sind in den Führungsabsätzen 35 schwimmend gelagert.

Um ein radiales Ausweichen der schwimmend gelagerten Schneidelemente 30a und 31a zu verhindern, sind die Führungsabsätze 35 etwa in ihrem, den Handhaben 13 bzw. 25 zugewandten unteren Drittel mit Haltenasen 47 versehen, während die Schneidelemente 30a und 31a mit korrespondierenden Haltenuten 46 versehen sind. Die Haltenasen 47 werden mit den Haltenuten 46 passgenau so in Wirkverbindung gebracht, dass kein radiales Ausweichen erfolgen kann.

Um die Schneidelemente 30a und 31a in ihrer Lage in den Führungsabsätzen 35 passgenau auszurichten, sind sie mit Zentrierbohrungen 34 versehen, die mit Zentrierbohrungen 34a in den Schneidmitteln 11a und 12a fluchten. Zur Fixierung der Schneidelemente 30a und 31a können Befestigungsschrauben 33 durch die Schneidmittel 11a und 12a gesteckt werden. Die Befestigungsschrauben 33 werden dazu durch die Zentrierbohrungen 34a geführt und in die Zentrierbohrungen 34 eingeschraubt. Zum Ausgleich möglicher unterschiedlicher Dicken der Schneidelemente 30a und 31a können nicht näher dargestellte Ausgleichsscheiben in die Führungsabsätze 35 eingelegt werden.

Nach dem Einlegen der Schneidelemente 30a und 31a in die Führungsabsätze 35 gehen die Schneidelemente 30a und 31a mit einem relativ flachen Freiwinkel 38a in die Schneidmittel 11a und 12a über.

Die Schneidmittel 11a und 12a sind im Bereich der Schneidelemente 30a und 31a mit relativ flach angefasten Schneidenwinkeln 42 versehen, die in entsprechende Freiwinkel 38a der Schneidelemente 30a bzw. 31a übergehen. In Abhängigkeit von dem abzutrennenden Material können diese Freiwinkel 38a unterschiedlich sein, um beim Schneiden weicher zu schneidender Materialien, beispielsweise Kupferkabel, ein Abquellen zu ermöglichen.

Um die Kraftaufnahme im Bereich der Zapfenschraube 11 zu verbessern, sind die Gelenkbohrungen 28 und 29 asymmetrisch in den äußeren freien Enden 50 und 50a der Schneidmittel 11a und 12a angeordnet. Dadurch entstehen hier radial außen liegende Materialverstärkungen 44, die beim Schneiden ein axiales Ausweichen der Schneidelemente 30a und 31a verhindern.

Um die Schneidelemente 30a und 31a in die Führungsabsätze 35 einlegen zu können, sind ihre äußeren freien Enden 50 und 50a radial innen mit asymmetrischen Materialverringerungen 43 versehen, die den radial außen liegenden Materialverstärkungen 44 gegenüberliegen.

Die Schneidelemente 30a und 31a sind an ihren vorderen freien Enden 48 mit Anlagebögen 52 versehen, die den Materialverringerungen 43 form- und kraftschlüssig angepasst sind. Im Bereich der Anlagebögen 52 weisen die Schneidelemente 30a und 31a axial verlaufende Anfasungen 45 auf, mit denen sie bei Offenstellung des beweglichen Schneidmittels 12a unter die jeweils gegenüberliegende Materialverstärkung 44 eingelegt werden können.

Die Schneidelemente 30a und 31a sind zwischen den Haltenuten 46 und den asymmetrischen Materialverstärkungen 44 schwimmend in ihrer Lage gehalten. Die gegenüberliegenden inneren freien Enden 49 können dabei freiliegen, und die einander gegenüberliegenden Schneidelemente 30a und 31a stützen sich axial mit ihren Oberflächen 53 passgenau aneinander ab.

Durch diese Maßnahmen können die Schneidelemente 30a und 31a aus massivem, durchgehärtetem bzw. durchhärtbarem Stangenmaterial als Platinen geschnitten und formgeschliffen werden. Sie können mit relativ geringem Aufwand in Serie hergestellt werden und sind leicht und schnell austauschbar.

Zur Gewichtsersparnis können die Schneidmittel 11a und 12a auch aus einer Leichtmetalllegierung bestehen und beispielsweise im Druckgussverfahren gefertigt worden sein.

## Patentansprüche

1. Handschneidgerät zum Ablängen von Kabeln, Stahlseilen, Stangen und dergleichen, mit zwei bewegbaren Schneidmitteln, von denen eines mit einer feststehenden Handhabe verbunden und das andere mittels einer beweglichen Handhabe und eines Untersetzungsgetriebes gegen das feststehende Schneidmittel bewegbar ist und den Schneidmitteln an sich bekannte, kraft- und formschlüssig verbindbare, austauschbare Schneidelemente zugeordnet sind, **dadurch gekennzeichnet, dass** die Schneidmittel (11, 12) mit einander zugewandten Führungsabsätzen (35) versehen sind und die austauschbaren Schneidelemente (30a, 31a) an ihren Schneidelementrücken (51) sich axial erstreckende Haltenuten (46) aufweisen, mit denen sie an formgleich ausgebildeten Haltenasen (47) im Bereich der Führungsabsätzen (35) form- und kraftschlüssig schwimmend in den Schneidmitteln (11a, 12a) gelagert sind.

2. Handschneidgerät nach Anspruch 1, **dadurch gekennzeichnet, dass** die Schneidelemente (30a, 31a) an ihren vorderen freien Enden (48) mit Anfasungen (45) versehen sind und die Schneidelemente (30a, 31a) mit diesen Anfasungen (45) unter innen liegende Materialverringerungen (43) des jeweils gegenüberliegenden Schneidmittels (11a, 12a) einlegbar sind.

3. Handschneidgerät nach den Ansprüchen 1 und 2, **dadurch gekennzeichnet, dass** die austauschbaren Schneidelemente (30a, 31a) als flache, absatzlose, spiegelbildlich ausgebildete Platinen aus massivem, durchgehärtetem Stangenmaterial geschnitten sind.

4. Handschneidgerät nach den Ansprüchen 1 bis 3, **dadurch gekennzeichnet, dass** die Schneidelemente (30a, 31a) einander zugewandte Freiwinkel (38, 38a) aufweisen, die in korrespondierende angefaste Schneidenwinkel (42) der Schneidmittel (11a, 12a) übergehen.

5. Handschneidgerät nach einem oder mehreren der Ansprüche 1 bis 4, **dadurch gekennzeichnet, dass** Schneidmittel (11, 11a, 12, 12a) vorgesehen sind, die im Bereich ihrer Absätze (35, 35a) radial nach innen verlaufende angefaste Schneidenwinkel (39, 42) aufweisen, die in entsprechende Freiwinkel (38, 38a) der Schneidelemente (30, 30a, 31, 31a) übergehen.

6. Handschneidgerät nach einem oder mehreren der Ansprüche 1 bis 4, **dadurch gekennzeichnet, dass** die Schneidelemente (30, 30a, 31, 31a) in Abhängigkeit von dem abzutrennenden Material unterschiedliche Freiwinkel (38, 38a) und Schneidenwinkel (39, 42) aufweisen.

7. Handschneidgerät nach einem der Ansprüche 1 bis 4, **dadurch gekennzeichnet, dass** die austauschbaren Schneidelemente (30, 30a, 31, 31a) in Abhängigkeit von dem abzutrennenden Material unterschiedliche Härten aufweisen.

8. Handschneidgerät nach einem oder mehreren der Ansprüche 1 bis 4, **dadurch gekennzeichnet, dass** die Schneidelemente (30, 30a, 31, 31a) konkav geformt und mittels Zentriermitteln (32, 32a 33, 34, 34a) passgenau mit den Schneidmitteln (11, 11a, 12, 12a) verbindbar sind.

9. Handschneidgerät nach den Ansprüchen 1 bis 8, **dadurch gekennzeichnet, dass** die Schneidmittel (11, 11a, 12, 12a) an ihren den Handhaben (13, 25) gegenüberliegenden vorderen freien Enden (50, 50a) mit Gelenkbohrungen (28, 29) versehen sind, durch die Gelenkbohrungen (28, 29) eine Zapfenschraube (16) geführt ist, um die das bewegliche Schneidmittel (12, 12a) relativ zu dem feststehenden Schneidmittel (11, 11a) verschwenkbar ist, wobei die Gelenkbohrungen (28, 29) unter Bildung einer radial außen liegenden Materialverstärkung (44) und einer radial innen liegenden Materialverringerung (43) asymmetrisch in den äußeren freien Enden (50, 50a) der Schneidmittel (11, 11a, 12, 12a) verlaufen.

## Claims

1. A manual cutting tool for cutting cables, steel cord, rods and the like to length, comprising a pair of movable cutting means one of which is connected to a stationary handle member and the other of which is adapted to be moved against the stationary cutting means by a movable handle member and transmission means, said cutting means having associated therewith known-per-se replaceable, concavely shaped cutting elements adapted to be connected in a frictional and shape lock, **characterized by** cutting means (11, 12) having mutually facing guide shoulders (35) thereon, with said replaceable cutting elements (30a, 31a) having on their rear surfaces (51) axially extending retaining grooves (46) by means of which said cutting elements are floatingly mounted on similarly shaped retaining tabs (47) in the area of guide shoulders (35) of cutting means (11, 12) in a shape- and force-locked manner.

2. Manual cutting tool as in claim 1, **characterized by** cutting elements (30a, 31a) having chamfers (45) at their free front ends (48) and by each cutting element (30a, 31a) being adapted to be placed with said chamfers (45) under internally located reduced-thickness portions (43) of the respective opposite one of cutting means (11a, 12a).

3. Manual cutting tool as in claim 1, **characterized by** said replaceable cutting elements (30a, 31a) being flat shoulder-less mirror-image plate elements cut from solid full-hardened rod material.

4. Manual cutting means as in claims 1 to 3, **characterized by** cutting elements (30a, 31a) having mutually facing relief angles (38, 38a) merging with corresponding chamfered cutting angles (42) of cutting means (11a, 12a).

5. Manual cutting tool as in one or more of claims 1 to 4, **characterized by** cutting means (11, 11a, 12, 12a) having in the region of their shoulders (35, 35a) radially inwardly extending chamfered cutting angles (39, 42) merging with corresponding relief angles (38, 38a) of cutting elements (30, 30a, 31, 31a).

6. Manual cutting tool as in one or more of claims 1 to 4, **characterized by** cutting elements (30, 30a, 31, 31a) having different relief angles (38, 38a) and cutting angles (39, 42) in dependence on the material to be severed.

7. Manual cutting tool as in one of claims 1 to 4, **characterized by** replaceable cutting elements (30, 30a, 31, 31a) having different hardness levels in dependence on the material to be severed.

8. Manual cutting tool as in one or more of claims 1 to 4, **characterized by** cutting elements (30, 30a, 31, 31a) being concavely shaped and being adapted to be connected with cutting means (11, 11a, 12, 12a) in a precisely fitting manner by centering means (32, 32a, 33, 34, 34a).

9. Manual cutting tool as in claims 1 to 8, **characterized by** cutting means (11, 11a, 12, 12a) having pivot bores (28, 29) through their free front ends (50, 50a) of opposite handles (13, 25), said pivot bores (28, 29) having passed therethrough a shank screw (16) about which said movable cutting means (12, 12a) is pivotable relative to said stationary cutting means (11, 11a), said pivot bores (28, 29) extending asymmetrically through the free outer ends (50, 50a) of cutting means (11, 11a, 12, 12a) and forming a radially outer portion (44) of increased material thickness and a radially inner portion (43) of reduced material thickness.

## Revendications

1. Appareil de sectionnement manuel pour la mise à longueur de câbles, de filins d'acier, de tiges et objets similaires, comprenant deux moyens sectionneurs mobiles dont l'un est relié à une poignée fixe et l'autre est mobile en direction du moyen sectionneur fixe, à l'aide d'une poignée mobile et d'un engrenage démultiplicateur, sachant que des éléments sectionneurs interchangeables connus par eux-mêmes, pouvant être solidarisés mécaniquement ou par concordance de formes, sont associés auxdits moyens sectionneurs, **caractérisé par le fait que** lesdits moyens sectionneurs (11, 12) sont munis de gradins de guidage (35) se faisant mutuellement face ; et les éléments sectionneurs interchangeables (30a, 31 a) comportent, sur leurs dos (51), des rainures d'arrêt (46) qui s'étendent axialement et par lesquelles lesdits éléments sont montés flottants dans les moyens sectionneurs (11a, 12a), mécaniquement ou par concordance de formes, sur des mentonnets d'arrêt (47) réalisés avec configuration identique dans la région des gradins de guidage (35).

2. Appareil de sectionnement manuel selon la revendication 1, **caractérisé par le fait que** les éléments sectionneurs (30a, 31a) sont dotés de biseaux (45) à leurs extrémités antérieures libres (48) ; et lesdits éléments sectionneurs (30a, 31 a) peuvent être insérés, par ces biseaux (45), au-dessous de rétrécissements de matière (43) occupant des positions intérieures sur le moyen sectionneur (11a, 12a) respectivement situé en vis-à-vis.

3. Appareil de sectionnement manuel selon les revendications 1 et 2, **caractérisé par le fait que** les éléments sectionneurs interchangeables (30a, 31 a) sont découpés à partir d'un matériau en barre massif et trempé, sous la forme de platines aplaties, exemptes de décrochements et offrant une réalisation spéculaire.

4. Appareil de sectionnement manuel selon les revendications 1 à 3, **caractérisé par le fait que** les éléments sectionneurs (30a, 31a) présentent des dépouilles (38, 38a) se faisant mutuellement face et fusionnant dans des dépouilles de sectionnement (42) des moyens sectionneurs (11a, 12a), complémentaires et biseautées.

5. Appareil de sectionnement manuel selon l'une ou plusieurs des revendications 1 à 4, **caractérisé par** la présence de moyens sectionneurs (11, 11a, 12, 12a) comportant, dans la région de leurs gradins (35, 35a), des dépouilles biseautées de sectionnement (39, 42) qui s'étendent radialement vers l'intérieur et fusionnent dans des dépouilles correspondantes (38, 38a) des éléments sectionneurs (30, 30a, 31, 31a).

6. Appareil de sectionnement manuel selon l'une ou plusieurs des revendications 1 à 4, **caractérisé par le fait que** les éléments sectionneurs (30, 30a, 31, 31a) possèdent des dépouilles (38, 38a) et des dépouilles de sectionnement (39, 42) différentes, en fonction du matériau devant être coupé.

7. Appareil de sectionnement manuel selon l'une des revendications 1 à 4, **caractérisé par le fait que** les éléments sectionneurs interchangeables (30, 30a, 31, 31 a) présentent des duretés différentes, en fonction du matériau devant être coupé.

8. Appareil de sectionnement manuel selon l'une ou plusieurs des revendications 1 à 4, **caractérisé par le fait que** les éléments sectionneurs (30, 30a, 31, 31a) sont de configuration concave et peuvent être reliés aux moyens sectionneurs (11, 11a, 12, 12a), avec ajustement précis, à l'aide de moyens de centrage (32, 32a, 33, 34, 34a).

9. Appareil de sectionnement manuel selon les revendications 1 à 8, **caractérisé par le fait que** les moyens sectionneurs (11, 11a, 12, 12a) sont pourvus de trous d'articulation (28, 29) à leurs extrémités antérieures libres (50, 50a) tournées à l'opposé des poignées (13, 25), trous d'articulation (28, 29) à travers lesquels est guidé un axe fileté (16) autour duquel le moyen sectionneur mobile (12, 12a) peut pivoter par rapport au moyen sectionneur fixe (11, 11a), lesdits trous d'articulation (28, 29) s'étendant asymétriquement, dans les extrémités extérieures libres (50, 50a) desdits moyens sectionneurs (11, 11a, 12, 12a), en donnant naissance à un épaississement de matière (44) occupant une position radialement extérieure, et à un rétrécissement de matière (43) occupant une position radialement intérieure.
